# EUROPEAN PATENT SPECIFICATION

(11) **EP 4 412 498 B1**
(45) Date of publication and mention of the grant of the patent: **06.08.2025**
(21) Application number: 22817917.2
(22) Date of filing: 14.11.2022
(51) Int. Cl.: A47J 31/52, A47J 31/54

(54) **COFFEE MACHINE AND COFFEE EXTRACTION METHOD WITH SUCH A COFFEE MACHINE**
KAFFEEMASCHINE SOWIE KAFFEEEXTRAKTIONSVERFAHREN MIT EINER SOLCHEN KAFFEEMASCHINE
MACHINE À CAFÉ ET PROCÉDÉ D'EXTRACTION DE CAFÉ À L'AIDE D'UNE TELLE MACHINE À CAFÉ

(30) Priority: 18.11.2021 IT 202100029165
(43) Date of publication of application: 14.08.2024
(73) Proprietor: De' Longhi Appliances S.r.l., 31100 Treviso (IT)
(72) Inventor: EVANGELISTI, Paolo, 31100 Treviso (IT); ACCIARI, Alberto, 31100 Treviso (IT); PIOVAN, Nicola, 31100 Treviso (IT); BONOTTO, Davide, 31100 Treviso (IT)
(74) Representative: Rapisardi, Mariacristina
(86) International application number: PCT/EP2022/081721
(87) International publication number: WO 2023/088823

(56) References cited:
- WO-A1-2007/060694
- WO-A1-2012/069958
- WO-A1-2016/034255
- WO-A1-2019/102509
- US-A1- 2010 282 088
- US-A1- 2018 199 755

## Description

The present invention refers to a coffee machine and to a coffee extraction method with such a coffee machine.

Automatic coffee machines capable of preparing both espresso beverages obtained at high pressure with cream formation and "drip" or American coffee beverages obtained at low pressure without cream formation are known.

In general, such coffee machines are provided with an infusion circuit having in cascade a water tank or a connection to a water source, a water supply pump, a boiler and an infusion unit where a dose of coffee powder is positioned. The document WO 2016/034255 discloses a coffee extraction method and a coffee machine performing such method.

The water that the pump draws from the tank or from the water mains is heated by the boiler and supplied to the infusion unit where it extracts the aromatic substances from the coffee powder.

For the espresso coffee beverage to be prepared throughout the infusion time, the dose of coffee is pressed inside the infusion chamber of the infusion unit and the coffee beverage leaving the infuser passes through a cream frother valve whose purpose is to increase the outlet pressure of the coffee beverage so as to generate turbulences in the flow, with consequent formation of air bubbles and foam.

For the "drip" coffee beverage to be prepared throughout the infusion time, the dose of coffee is not pressed inside the infusion chamber of the infusion unit and the coffee beverage leaving the infuser by-passes the cream frother valve.

In the coffee sector, the appreciation of other types of coffee beverages is spreading among consumers, including the so-called "cold brew" coffee.

"Cold brew" coffee is a type of beverage that requires the consumer to add ice cubes to the product dispensed in the cup until the desired result is obtained.

The organoleptic properties of "cold brew" coffee depend significantly on the extraction temperature.

Generally, coffee machines currently on the market for the preparation of a "cold brew" coffee are not able to control the process variables, with consequent deterioration of the organoleptic properties of the product in the cup.

In addition, the coffee machines currently on the market for the preparation of a "cold brew" coffee exhibit a lack of versatility in use as they are not able to customize the product dispensed. The technical task of the present invention is to overcome the drawbacks complained of by the prior art.

As part of this technical task, an object of the present invention is to realize a coffee extraction method and a coffee machine by means of which a variety of coffee recipes can be made while always ensuring the desired organoleptic properties of the product in the cup.

Another object of the present invention is to realize a coffee extraction method and a coffee machine by means of which both espresso coffee and "drip" coffee and "cold brew" coffee can be prepared.

The technical task, as well as this and other objects are achieved by the present invention which discloses a coffee extraction method with a coffee machine according to claim 1.

Preferably an instantaneous boiler is employed as the electric heater.

Preferably said coffee machine conveys said heat regulation water flow in sequence at least through said electric heater and said infusion unit.

Preferably said coffee machine detects said temperature value at an inlet or an outlet of said electric heater.

In one embodiment of the invention said coffee machine performs said heat regulation step by activating said electric heater for heating said heat regulation water flow only if said detected temperature value is lower than said initial coffee extraction temperature of the selected coffee extraction cycle.

In one embodiment of the invention, at least one coffee extraction cycle envisages the activation of said electric heater throughout said extraction step for the maintenance of said initial extraction value during said extraction step.

In one embodiment of the invention, at least one coffee extraction cycle envisages the deactivation of said electric heater throughout said extraction step.

In one embodiment of the invention at least one extraction cycle envisages an initial extraction temperature value equal to room temperature.

In one embodiment of the invention at least one extraction cycle envisages an initial extraction temperature value comprised between 50°C and 60°C.

In one embodiment of the invention at least one extraction cycle envisages an initial extraction temperature value comprised between 90°C and 95°C.

The present invention also discloses a coffee machine according to claim 11.

In one embodiment of the invention said infusion circuit further comprises a coffee infusion dispensing conduit, a first connection conduit between a delivery of the supply pump and an inlet of the electric heater, a second connection conduit between an outlet of the electric heater and an inlet of the infusion unit, a valve unit, a third connection conduit between an outlet of the infusion unit and an inlet of the valve unit, said valve unit being configured to provide a first outlet path at high pressure comprising a back pressure means and a second outlet path at low pressure comprising a bypass means selectively activatable by the electronic controller for bypassing the action of said back pressure means and making the beverage pass into said second outlet path.

In one embodiment of the invention said first connection conduit, said electric heater, said second connection conduit, said infusion unit, said third connection conduit and said valve unit are connected to be crossed in sequence by said heat regulation water flow.

According to the invention the extraction of "cold brew" coffee at the desired temperature can be obtained, since the preliminary control and regulation of the temperature of the components of the infusion circuit through the heat exchange due to the heat regulation water flow is added to the control and to the regulation of the temperature of the infusion water.

In the preferred solution, the heat regulation water flow is disposed of through the discharge conduit, but it is not ruled out that it can be disposed of through the infusion dispensing conduit in such a way as to have a substantial homogenization of the temperature along the entire hydraulic circuit before the extraction step is performed.

In this regard, it should also be noted that the adoption of an instantaneous boiler as an electric heater, otherwise known as a "flow through heater", greatly facilitates obtaining the initial extraction temperature with a modest amount of heat regulation water.

The invention will be better illustrated by the description of a preferred embodiment thereof, given by way of non-limiting example, with reference to the following accompanying figures:
- figure 1 shows a diagram of the hydraulic circuit of the coffee machine; and
- figure 2 shows the time control logic of the temperature in various coffee extraction cycles.

With reference to the figures, the automatic coffee machine 10 comprises an electronic controller 100 and an infusion circuit that includes: a water source 14, in the specific case a water tank, or a connection to a water source, for example a connection to the water mains; a supply pump 17; an electric heater 18, particularly an instantaneous boiler provided with one or more electric resistors 19; a first connection conduit 120 between a delivery of the supply pump 17 and an inlet of the electric heater 18; an infusion unit 11 provided with an infusion chamber 12 suitable for containing a dose of coffee powder to be infused, where the infusion chamber 12 has an inlet opening 22 and an outlet opening 23; a second connection conduit 13 between an outlet of the electric heater 18 and the inlet opening 22 of the infusion unit 11; a valve unit 35 provided with an inlet 31a and an outlet 31b; and a third connection conduit 15 between the outlet opening 23 of the infusion chamber 12 and the inlet 31a of the valve unit 35.

The inlet opening 22 and the outlet opening 23 of the infusion chamber 12 are preferably made one on a fixed body 24 and the other one on a movable piston 25.

The infusion circuit further comprises a dispensing valve 26 placed upstream of the inlet opening 22 of the infusion chamber 12, configured to keep the inlet opening 22 of the infusion chamber 12 closed until the supplied water exceeds a certain pressure value, and open it upon exceeding this value.

By way of example, the dispensing valve 26 can be configured to counteract a maximum pressure of about 3bar, preferably comprised between 1 and 3bar.

The dispensing valve 26 may also be configured to act as a non-return valve, so as to prevent a retrograde flow from the infusion chamber 12.

The valve unit 35 downstream of the infusion chamber 12 is configured to define a first outlet path 27 at high pressure and a second outlet path 28 at low pressure.

The inlet 31a of the valve unit 35 is connected to the outlet opening 23 of the infusion chamber 12 and the outlet 31b of the valve unit 35 is connected to a beverage dispensing conduit 32 in turn connected to a dispensing nozzle 16 by means of which the coffee infusion can be dispensed into a container 110.

The valve unit 35 comprises a back pressure means 33 adapted to provide a certain back pressure force and a bypass means 34 selectively activatable to bypass the action of the back pressure means 33.

In the solution illustrated by way of example, the path at high pressure 27 and the path at low pressure 28 are respectively defined by a first branch 29 and by a second branch 30, which are distinct from each other and which extend between the inlet 31a and the outlet 31b.

According to such an embodiment, the back pressure means comprises a cream frother valve 33 arranged along the first branch 29 and configured to allow the beverage to pass through it only if the pressure exceeds a defined threshold value.

By way of example, the cream frother valve 33 can be configured to counteract a maximum pressure of about 3bar, preferably comprised between 1 and 3bar.

The bypass means may comprise a shut-off valve 34 arranged along the second branch 30 that can be selectively controlled to open or close a passage conduit and allow, or respectively prevent, the beverage to pass therethrough.

The shut-off valve 34 may be, for example, a solenoid valve.

The coffee machine 10 also has a special sensor means 21 of a temperature along the infusion circuit, preferably placed upstream or, as shown, downstream of the electric heater 18 and in particular between the electric heater 18 and the infusion unit 11.

A flowmeter 20 may also be provided along the infusion circuit, preferably placed upstream of the supply pump 17.

The machine 10 may also comprise a self-triggering valve 38 arranged along a conduit 39 placed downstream of the pump 17 and in derivation with the first connection conduit 120.

The self-triggering valve 38 can be made as a sleeve valve, or a "pinch" valve.

Finally, the machine 10 also comprises a discharge conduit 36 for the residual water deriving from the exhausted coffee powder.

The discharge conduit 36 may be made in derivation of the dispensing conduit 32 and be kept normally closed by means of a discharge solenoid valve 37 arranged along it.

The coffee extraction method is as follows.

The electronic controller 100 has in memory a plurality of coffee recipes and an association to each recipe of a corresponding coffee extraction cycle executable from the coffee machine.

Each coffee extraction cycle advantageously comprises in sequence an infusion circuit heat regulation step, a step of introducing the dose of coffee powder into the infusion chamber 12, and a step of extracting coffee having an initial coffee extraction temperature value Ti (where i=1, 2, 3,... ).

The electronic controller 100, after having acquired from the consumer, for example through a machine/user interface, a selection of a recipe, performs the extraction cycle associated therewith.

In practice, the electronic controller 100 acquires the temperature value T detected by the sensor means 21, compares the temperature value T detected with the initial extraction temperature value Ti of the selected extraction cycle, and performs the heat regulation step by activating the supply pump 17 for generating a heat regulation water flow until the value T of the detected temperature achieves the initial extraction temperature value Ti of the selected extraction cycle. The heat regulation water flow flows at least through the main components of the infusion circuit, in particular at least through the electric heater 18 and the infusion unit 11.

Preferably, as shown, the first connection conduit 120, the electric heater 18, the second connection conduit 13, the infusion unit 11, the third connection conduit 15 and the valve unit 35 are connected to be crossed in sequence by the heat regulation water flow.

In the solution shown, the heat regulation water flow can be discharged through the discharge conduit 36 but it is not ruled out that it can be discharged through the dispensing conduit 32 to have greater temperature uniformity along the infusion circuit before starting the extraction step. For the execution of the heat regulation step, the electronic controller 100 activates the electric heater 18 for heating the heat regulation water flow if the value T of the acquired temperature is lower than the initial extraction temperature value Ti.

The electronic controller 100 can regulate the settings of the pump 17 and/or of the electric heater 18 so that the heat regulation water flow can quickly bring the value T of the temperature detected by the sensor means 21 to the initial extraction temperature value Ti.

When, as a result of the thermal exchange between the heat regulation water flow and the components of the infusion circuit, the value T of the temperature detected by the sensor means 21 is brought to the initial extraction temperature value Ti, the heat regulation step ends and the electronic controller 100 can control the execution of the step of introducing the dose of coffee powder into the infusion chamber 12 and then the execution of the extraction step. Advantageously, the various selectable recipes, and the extraction cycles associated therewith can also be programmable.

Depending on the recipe, the extraction cycles may differ, in addition to the initial extraction temperature value Ti, also in the time trend of the temperature during the extraction step and/or in the trend of the pressure along the infusion circuit also during the extraction step.

Some extraction cycles associated with recipes that can be performed by the coffee machine are shown below.

### CASE 1

The heat regulation step depends on the initial extraction cycle temperature value T1 in turn depending on the recipe.

The initial extraction cycle temperature value T1 is set at 25°C, i.e. at room temperature.

The infusion unit 11 has the infusion chamber 12 empty, the exhausted coffee powder having previously been expelled.

The infusion chamber 12 then connects the second connection conduit 13 to the third connection conduit 15.

When acquiring the recipe and identifying the associated extraction cycle, the electronic controller 100 opens the shut-off valve 34 to allow bypassing the cream frother valve 33 and opens the discharge solenoid valve 37 to allow the discharge of water.

The electronic controller 100 acquires the value T of the temperature detected by the temperature sensor means 21 and, if the acquired value T is higher than the initial extraction cycle value T1, then it keeps the electric heater 18 deactivated but it activates the pump 17 which draws water generally at room temperature from the tank 14 or from the water network so as to generate a heat regulation water flow that flows through the infusion circuit and cools it.

The electronic controller 100 deactivates the pump 17 for interrupting the heat regulation water flow when it acquires a temperature value T equal to the initial extraction cycle temperature value T1.

At this point the heat regulation step ends.

The electronic controller 100 does not intervene on the shut-off valve 34 which remains open but it controls the closing of the discharge solenoid valve 37 in order to connect the infusion unit 11 to the dispensing conduit 32.

The electronic controller 100 controls in sequence the opening of the infusion chamber 12, the loading of the dose of coffee powder, and the closing of the infusion chamber 12 without compression of the dose of coffee powder.

At this point the extraction step begins.

The electronic controller 100 controls the activation of the pump 17 and keeps the electric heater 18 deactivated.

Infusion takes place by keeping the shut-off valve 34 open and the discharge solenoid valve 37 closed.

The pump 17 can be controlled continuously or by pulses depending on the type of aroma to be obtained, in any case guaranteeing a pressure around 1 bar.

Depending on the recipe selected through the machine/user interface, an amount of ice to be added to the product in the cup is recommended.

In this way a "cold brew" coffee of the classic type can be obtained.

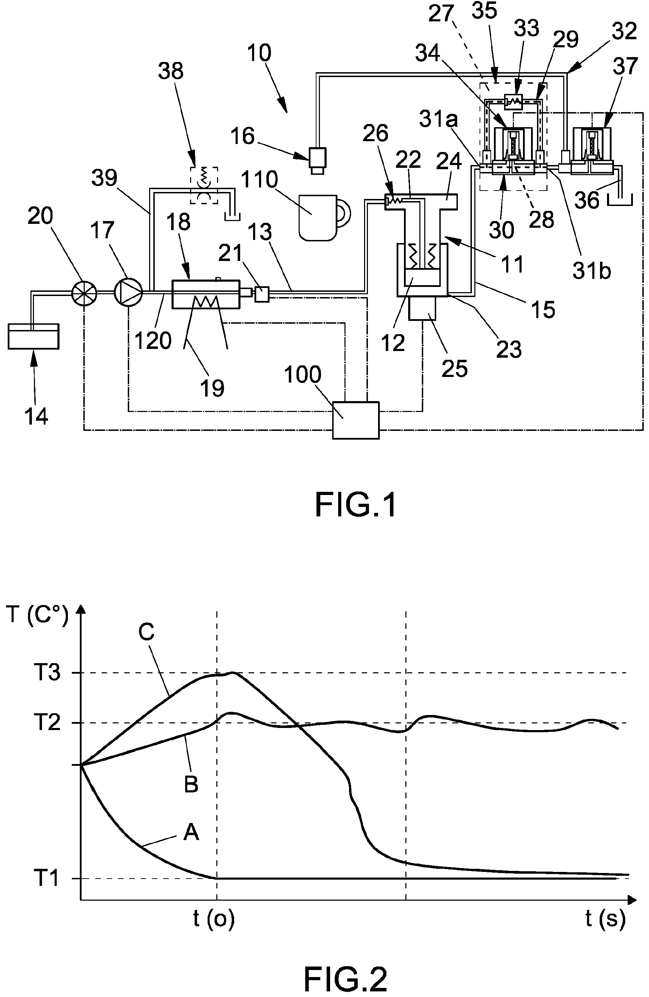

The extraction cycle is indicated by the letter A in figure 2, where the x axis shows the time and the y axis the temperature detected by the sensor means 21, and where t₀ indicates the instant in which the temperature regulation step ends and the extraction step begins.

### CASE 2

Case 2 differs from case 1 in that the initial extraction cycle temperature value T2 is set between 50°C and 60°C.

The infusion unit 11 has the infusion chamber 12 empty, the exhausted coffee powder having previously been expelled.

The infusion chamber 12 then connects the second connection conduit 13 to the third connection conduit 15.

When acquiring the recipe and identifying the associated extraction cycle, the electronic controller 100 opens the shut-off valve 34 to allow bypassing the cream frother valve 33 and opens the discharge solenoid valve 37 to allow the discharge of water.

The electronic controller 100 acquires the value T of the temperature detected by the temperature sensor means 21 and, if the acquired value T is lower than the initial extraction cycle value T2, then controls the activation of the electric heater 18 as well as of the pump 17 which draws water generally at room temperature from the tank 14 or from the water mains so as to generate a heat regulation water flow that, after being heated by the electric heater 18, flows through the infusion circuit and heats it.

The electronic controller 100 deactivates the pump 17 and the electric heater 18 when it acquires a temperature value T equal to the initial extraction cycle temperature value T2.

At this point the heat regulation step ends.

The electronic controller 100 does not intervene on the shut-off valve 34 which remains open but it controls the closing of the discharge solenoid valve 37 in order to connect the infusion unit 11 to the dispensing conduit 32.

The electronic controller 100 controls in sequence the opening of the infusion chamber 12, the loading of the dose of coffee powder, and the closing of the infusion chamber 12 without compression of the dose of coffee powder.

At this point the extraction step begins.

The electronic controller 100 activates the pump 17 and the electric heater 18.

Infusion takes place by keeping the shut-off valve 34 open and the discharge solenoid valve 37 closed.

The pump 17 can be controlled by the electronic controller 100 continuously or by pulses depending on the type of aroma to be obtained, in any case guaranteeing a pressure around 1 bar. The electric heater 18 is controlled by the electronic controller 100 in such a way as to keep substantially at the value T2 the temperature detected by the sensor means 21 throughout the extraction step.

Depending on the recipe selected through the machine/user interface, an amount of ice to be added to the product in the cup is recommended.

In this way another type of "cold brew" coffee can be obtained.

The extraction cycle is indicated by the letter B in figure 2, where t₀ still indicates the instant in which the heat regulation step ends and the extraction step begins.

### CASE 3

Case 3 differs from case 2 in that the initial extraction cycle temperature value T3 is set between 90°C and 95°C.

The infusion unit 11 has the infusion chamber 12 empty, the exhausted coffee powder having previously been expelled.

The infusion chamber 12 then connects the second connection conduit 13 to the third connection conduit 15.

When acquiring the recipe and identifying the extraction cycle associated with it, the electronic controller 100 opens the shut-off valve 34 to allow bypassing the cream frother valve 33 and opens the drain solenoid valve 37 to allow the discharge of water.

The electronic controller 100 acquires the value T of the temperature detected by the temperature sensor means 21 and, if the acquired value T is lower than the initial extraction cycle value T3, then controls the activation of the electric heater 18 as well as of the pump 17 which draws water generally at room temperature from the tank 14 or from the water mains so as to generate a heat regulation water flow that, after being heated by the electric heater 18, flows through the infusion circuit and heats it.

The electronic controller 100 deactivates the pump 17 and the electric heater 18 when it acquires a temperature value T equal to the initial extraction cycle temperature value T3.

At this point the heat regulation step ends.

The electronic controller 100 does not intervene on the shut-off valve 34 which remains open but it controls the closing of the discharge solenoid valve 37 in order to connect the infusion unit 11 to the dispensing conduit 32.

The electronic controller 100 controls in sequence the opening of the infusion chamber 12, the loading of the dose of coffee powder, and the closing of the infusion chamber 12 without compression of the dose of coffee powder.

At this point the extraction step begins.

The electronic controller 100 activates the pump 17 but keeps the electric heater 18 deactivated. Infusion takes place by keeping the shut-off valve 34 open and the discharge solenoid valve 37 closed.

The pump 17 can be controlled by the electronic controller 100 continuously or by pulses depending on the type of aroma to be obtained, in any case guaranteeing a pressure around 1 bar. Since the electric heater 18 is deactivated, during delivery the detected temperature T will gradually move towards room temperature.

Depending on the recipe selected through the machine/user interface, an amount of ice to be added to the product in the cup is recommended.

In this way another type of "cold brew" coffee can be obtained.

The extraction cycle is indicated by the letter C in figure 2, where t₀ still indicates the instant in which the heat regulation step ends and the extraction step begins.

### CASE 4

Case 4 differs from case 1 in the extraction step which is performed with the shut-off valve 34 closed so that the first outlet path 27 at high pressure is selected in place of the second outlet path 28 at low pressure.

In this way another type of "cold brew" coffee can be obtained.

### CASE 5

Case 5 differs from case 2 in the extraction step which is performed with the shut-off valve 34 closed so that the first outlet path 27 at high pressure is selected in place of the second outlet path 28 at low pressure.

In this way another type of "cold brew" coffee can be obtained.

### CASE 6

Case 6 differs from case 3 in the extraction step which is performed with the shut-off valve 34 closed so that the first outlet path 27 at high pressure is selected in place of the second outlet path 28 at low pressure.

In this way another type of "cold brew" coffee can be obtained.

All the extraction cycles set out above may involve drying the exhausted dose of coffee by squeezing it. In particular, the electronic controller 100 can order a relative movement of approach between the piston 25 and the body 24 and the liquid extracted from the exhausted dose of coffee can be conveyed to the discharge conduit 36 simply by switching the discharge solenoid valve 37.

The coffee machine 10 can perform in a versatile manner extraction cycles also of other types, for example an extraction cycle that envisages a compression of the dose of coffee between the piston 25 and the body 24 of the infusion chamber 12, and the execution of the extraction step with an initial cycle value Ti between 90 °C and 95 °C maintained throughout extraction step, with a pump operating at high pressure, for example at least 6 bar, and a shut-off valve 34 closed for extracting an espresso coffee.

More generally, in at least one extraction cycle it can be provided for the extraction step to take place with the electric heater 18 activated for the maintenance of the initial extraction temperature, as illustrated for example in cases 2 and 5 set out above, or for the extraction step to take place with the electric heater 18 deactivated for the gradual descent of the initial extraction temperature, as illustrated for example in cases 3 and 6 set out above.

Finally, according to the invention it is possible to envisage the automatic execution of a coffee machine sanitizing cycle, where the supply pump 17 is activated with the electric heater 18 activated and the infusion chamber 12 is empty for circulating water at a high temperature, for example between 90 °C and 95 °C, along the infusion circuit.

The electronic controller 100 of the coffee machine may be programmed to automatically execute a sanitization cycle at each coffee machine switching on and/or if an extraction cycle at high temperature, for example 90°C and 95°C, has not been selected for a number of consecutive times.

Modifications and/or additions of parts can be made to the described coffee machine and extraction method, without thereby departing from the scope of the present invention as defined by the claims.

## Claims

1. A coffee extraction method with a coffee machine (10) comprising an infusion circuit at least including a water tank (14) or a connection to a water source, a supply pump (17), an electric heater (18) and an infusion unit (11) having an infusion chamber (12) where a dose of coffee powder can be positioned, connected in sequence,wherein said machine stores a plurality of selectable extraction cycles each including in sequence an infusion circuit heat regulation step, a step of introducing said dose into said infusion chamber (12), and a step of extracting coffee having an initial coffee extraction temperature value (Ti), and in that at least one extraction cycle envisages the extraction step with an initial extraction temperature value (Ti) equal to room temperature and with said electric heater (18) deactivated, **characterized in that**, after acquiring a selection of a coffee extraction cycle, the coffee machine (10) detects the value (T) of a temperature along the infusion circuit, compares said detected temperature value (T) with the initial extraction temperature value (Ti) of the selected extraction cycle, and performs the heat regulation step by activating the supply pump (17) to generate a heat regulation water flow in the absence of said dose of coffee in said infusion chamber (12) until said detected temperature value (T) achieves said initial extraction temperature value (Ti) of the selected extraction cycle.

2. The coffee extraction method according to claim 1, **characterised in that** an instant boiler is used as the electric heater (18).

3. The coffee extraction method according to any one of the preceding claims, **characterised in that** said coffee machine (10) conveys said heat regulation water flow in sequence at least through said electric heater (18) and said infusion unit (11).

4. The coffee extraction method according to the preceding claim, **characterised in that** said coffee machine (10) conveys said heat regulation water flow towards a discharge conduit (36) positioned downstream of said infusion unit (11).

5. The coffee extraction method according to any one of the preceding claims, **characterised in that** said coffee machine (10) detects said temperature value (T) at an inlet or an outlet of said electric heater (18).

6. The coffee extraction method according to any one of the preceding claims, **characterised in that** said coffee machine (10) performs said heat regulation step by activating said electric heater (18) for heating said heat regulation water flow only if said detected temperature value (T) is lower than said initial coffee extraction temperature (Ti) of the selected coffee extraction cycle.

7. The coffee extraction method according to any one of the preceding claims, **characterised in that** at least one coffee extraction cycle envisages the activation of said electric heater (18) throughout said extraction step for the maintenance of said initial extraction value (Ti) during said extraction step.

8. The coffee extraction method according to any one of the preceding claims, **characterised in that** at least one coffee extraction cycle envisages the deactivation of said electric heater (18) throughout said extraction step.

9. The coffee extraction method according to any one of claims 1 to 8, **characterised in that** at least one extraction cycle envisages an initial extraction temperature value (Ti) comprised between 50°C and 60°C.

10. The coffee extraction method according to any one of claims 1 to 8, **characterised in that** at least one extraction cycle envisages an initial extraction temperature value (Ti) comprised between 90°C and 95°C.

11. A coffee machine (10) comprising an electronic controller (100), an infusion circuit and sensor means (21) of a temperature along said infusion circuit, where said infusion circuit comprises a water tank (14) or a connection to a water source, a supply pump (17), an electric heater (18) and an infusion unit (11) having an infusion chamber (12) where a dose of coffee powder can be positioned, connected in sequence, wherein said electronic controller (100) stores a plurality of selectable coffee extraction cycles each including in sequence an infusion circuit heat regulation step, a step of introducing said dose into said infusion chamber (12), and a coffee extraction step having an initial coffee extraction temperature value (Ti), **characterized in that** at least one extraction cycle envisages the extraction step with an initial extraction temperature value (Ti) equal to room temperature and with said electric heater (18) deactivated, and **in that** said electronic controller (100) is configured to:
- acquire a selection of a coffee extraction cycle;
- acquire the value (T) of the temperature detected by said sensor means (21);
- compare said detected temperature value (T) with the initial extraction temperature value (Ti) of the selected extraction cycle; and
- perform said heat regulation step by activating the supply pump (17) for generating a heat regulation water flow in the absence of said dose of coffee in said infusion chamber (12) until said detected temperature value (T) achieves said initial extraction temperature value (Ti) of the selected extraction cycle.

12. The coffee machine (10) according to the preceding claim, **characterised in that** said electric heater (18) consists of an instant boiler.

13. The coffee machine (10) according to any one of claims 11 and 12, **characterised in that** said infusion circuit further comprises a coffee infusion dispensing conduit (32), a first connection conduit (120) between the delivery of the supply pump (17) and an inlet of the electric heater (18), a second connection conduit (13) between an outlet of the electric heater (18) and an inlet of the infusion unit (11), a valve unit (35), a third connection conduit (15) between an outlet of the infusion unit (11) and an inlet of the valve unit (35), said valve unit being configured to provide a first outlet path (27) at high pressure comprising a back pressure means (33) and a second outlet path (28) at low pressure comprising a bypass means (34) selectively activatable by the electronic controller (100) for bypassing the action of said back pressure means and making the beverage pass into said second outlet path (28).

14. The coffee machine (10) according to the preceding claim, **characterised in that** said first connection conduit (120), said electric heater (18), said second connection conduit (13), said infusion unit (11), said third connection conduit (15) and said valve unit (35) are connected to be crossed in sequence by said heat regulation water flow.

## Patentansprüche

1. Verfahren zur Kaffeeextraktion mit einer Kaffeemaschine (10), die einen Brühkreislauf umfasst, welcher zumindest einen Wassertank (14) oder einen Anschluss an eine Wasserquelle, eine Förderpumpe (17), einen elektrischen Heizkörper (18) und eine Brühgruppe (11) mit einer Brühkammer (12), in die eine Portion Kaffeepulver eingebracht werden kann, in Reihe geschaltet umfasst, wobei die Maschine eine Vielzahl wählbarer Extraktionszyklen speichert, von denen jeder nacheinander einen Schritt zur Temperaturregelung des Brühkreislaufs, einen Schritt zum Einbringen der Portion in die Brühkammer (12) und einen Schritt zur Kaffeeextraktion mit einem Anfangswert der Extraktionstemperatur (Ti) umfasst, und wobei mindestens ein Extraktionszyklus den Extraktionsschritt mit einem Anfangswert der Extraktionstemperatur (Ti) auf Raumtemperatur und bei deaktiviertem elektrischen Heizkörper (18) vorsieht, **dadurch gekennzeichnet, dass** die Kaffeemaschine (10) nach Auswahl eines Kaffeeextraktionszyklus den Temperaturwert (T) entlang des Brühkreislaufs erfasst, diesen erfassten Temperaturwert (T) mit dem Anfangswert der Extraktionstemperatur (Ti) des gewählten Extraktionszyklus vergleicht und den Schritt der Temperaturregelung dadurch ausführt, dass die Förderpumpe (17) aktiviert wird, um einen Wasserfluss zur Temperaturregelung zu erzeugen, wobei sich keine Portion Kaffee in der Brühkammer (12) befindet, bis der erfasste Temperaturwert (T) den Anfangswert der Extraktionstemperatur (Ti) des gewählten Extraktionszyklus erreicht.

2. Verfahren zur Kaffeeextraktion nach Anspruch 1, **dadurch gekennzeichnet, dass** ein Durchlauferhitzer als elektrischer Heizkörper (18) verwendet wird.

3. Verfahren zur Kaffeeextraktion nach einem der vorhergehenden Ansprüche, **dadurch gekennzeichnet, dass** die Kaffeemaschine (10) den Wasserfluss zur Temperaturregelung nacheinander zumindest durch den elektrischen Heizkörper (18) und die Brühgruppe (11) leitet.

4. Verfahren zur Kaffeeextraktion nach dem vorhergehenden Anspruch, **dadurch gekennzeichnet, dass** die Kaffeemaschine (10) den Wasserfluss zur Temperaturregelung zu einer Auslassleitung (36) leitet, die stromabwärts der Brühgruppe (11) angeordnet ist.

5. Verfahren zur Kaffeeextraktion nach einem der vorhergehenden Ansprüche, **dadurch gekennzeichnet, dass** die Kaffeemaschine (10) den Temperaturwert (T) an einem Einlass oder Auslass des elektrischen Heizkörpers (18) erfasst.

6. Verfahren zur Kaffeeextraktion nach einem der vorhergehenden Ansprüche, **dadurch gekennzeichnet, dass** die Kaffeemaschine (10) den Schritt der Temperaturregelung dadurch ausführt, dass der elektrische Heizkörper (18) zur Erwärmung des Wasserflusses zur Temperaturregelung nur dann aktiviert wird, wenn der erfasste Temperaturwert (T) niedriger ist als die Anfangsextraktionstemperatur (Ti) des gewählten Kaffeeextraktionszyklus.

7. Verfahren zur Kaffeeextraktion nach einem der vorhergehenden Ansprüche, **dadurch gekennzeichnet, dass** bei mindestens einem Kaffeeextraktionszyklus der elektrische Heizkörper (18) während des gesamten Extraktionsschrittes aktiviert bleibt, um den Anfangswert der Extraktionstemperatur (Ti) während des Extraktionsschrittes beizubehalten.

8. Verfahren zur Kaffeeextraktion nach einem der vorhergehenden Ansprüche, **dadurch gekennzeichnet, dass** bei mindestens einem Kaffeeextraktionszyklus der elektrische Heizkörper (18) während des gesamten Extraktionsschrittes deaktiviert bleibt.

9. Verfahren zur Kaffeeextraktion nach einem der Ansprüche 1 bis 8, **dadurch gekennzeichnet, dass** bei mindestens einem Extraktionszyklus ein Anfangswert der Extraktionstemperatur (Ti) zwischen 50 °C und 60 °C vorgesehen ist.

10. Verfahren zur Kaffeeextraktion nach einem der Ansprüche 1 bis 8, **dadurch gekennzeichnet, dass** bei mindestens einem Extraktionszyklus ein Anfangswert der Extraktionstemperatur (Ti) zwischen 90 °C und 95 °C vorgesehen ist.

11. Kaffeemaschine (10), umfassend eine elektronische Steuereinheit (100), einen Brühkreislauf und Sensormittel (21) zur Erfassung einer Temperatur entlang des Brühkreislaufs, wobei der Brühkreislauf einen Wassertank (14) oder einen Anschluss an eine Wasserquelle, eine Förderpumpe (17), einen elektrischen Heizkörper (18) und eine Brühgruppe (11) mit einer Brühkammer (12), in die eine Portion Kaffeepulver eingebracht werden kann, in Reihe geschaltet umfasst, wobei die elektronische Steuereinheit (100) eine Vielzahl wählbarer Kaffeeextraktionszyklen speichert, die jeweils nacheinander einen Schritt zur Temperaturregelung des Brühkreislaufs, einen Schritt zum Einbringen der Portion in die Brühkammer (12) und einen Kaffeeextraktionsschritt mit einem Anfangswert der Kaffeeextraktionstemperatur (Ti) umfassen, **dadurch gekennzeichnet, dass** mindestens ein Extraktionszyklus den Extraktionsschritt mit einem Anfangswert der Extraktionstemperatur (Ti) auf Raumtemperatur und bei deaktiviertem elektrischen Heizkörper (18) vorsieht, und dass die elektronische Steuereinheit (100) so konfiguriert ist, dass sie:
- eine Auswahl eines Kaffeeextraktionszyklus übernimmt,
- den von den Sensormitteln (21) erfassten Temperaturwert (T) übernimmt,
- den erfassten Temperaturwert (T) mit dem Anfangswert der Extraktionstemperatur (Ti) des gewählten Extraktionszyklus vergleicht, und
- den Schritt der Temperaturregelung dadurch ausführt, dass die Förderpumpe (17) aktiviert wird, um einen Wasserfluss zur Temperaturregelung zu erzeugen, wobei sich keine Portion Kaffee in der Brühkammer (12) befindet, bis der erfasste Temperaturwert (T) den Anfangswert der Extraktionstemperatur (Ti) des gewählten Extraktionszyklus erreicht hat.

12. Kaffeemaschine (10) nach dem vorhergehenden Anspruch, **dadurch gekennzeichnet, dass** der elektrische Heizkörper (18) aus einem Durchlauferhitzer besteht.

13. Kaffeemaschine (10) nach einem der Ansprüche 11 und 12, **dadurch gekennzeichnet, dass** der Brühkreislauf ferner eine Ausgabeleitung (32) für die Kaffeeinfusion, eine erste Verbindungsleitung (120) zwischen dem Auslass der Förderpumpe (17) und einem Einlass des elektrischen Heizkörpers (18), eine zweite Verbindungsleitung (13) zwischen einem Auslass des elektrischen Heizkörpers (18) und einem Einlass der Brühgruppe (11), eine Ventileinheit (35), eine dritte Verbindungsleitung (15) zwischen einem Auslass der Brühgruppe (11) und einem Einlass der Ventileinheit (35) umfasst, wobei die Ventileinheit so konfiguriert ist, dass sie einen ersten Auslassweg (27) mit hohem Druck mit einem Rückdruckmittel (33) und einen zweiten Auslassweg (28) mit niedrigem Druck mit einem Bypassmittel (34) bereitstellt, das selektiv von der elektronischen Steuereinheit (100) aktiviert werden kann, um die Wirkung des Rückdruckmittels zu umgehen und das Getränk über den zweiten Auslassweg (28) zu leiten.

14. Kaffeemaschine (10) nach dem vorhergehenden Anspruch, **dadurch gekennzeichnet, dass** die erste Verbindungsleitung (120), der elektrische Heizkörper (18), die zweite Verbindungsleitung (13), die Brühgruppe (11), die dritte Verbindungsleitung (15) und die Ventileinheit (35) so miteinander verbunden sind, dass der Wasserfluss zur Temperaturregelung sie der Reihe nach durchquert.

## Revendications

1. Procédé d'extraction de café avec une machine à café (10) comprenant un circuit d'infusion incluant au moins un réservoir d'eau (14) ou une connexion à une source d'eau, une pompe d'alimentation (17), un chauffage électrique (18) et une unité d'infusion (11) ayant une chambre d'infusion (12) dans laquelle une dose de poudre de café peut être positionnée, connectés en série, la machine stockant une pluralité de cycles d'extraction sélectionnables comprenant chacun, en séquence, une étape de régulation thermique du circuit d'infusion, une étape d'introduction de ladite dose dans ladite chambre d'infusion (12), et une étape d'extraction du café avec une valeur initiale de température d'extraction du café (Ti), et en ce qu'au moins un cycle d'extraction prévoit l'étape d'extraction avec une valeur initiale de température d'extraction (Ti) égale à la température ambiante et avec ledit chauffage électrique (18) désactivé, **caractérisé en ce qu'**après la sélection d'un cycle d'extraction de café, la machine à café (10) détecte la valeur (T) d'une température le long du circuit d'infusion, compare ladite valeur de température détectée (T) à la valeur initiale de température d'extraction (Ti) du cycle d'extraction sélectionné, et exécute l'étape de régulation thermique en activant la pompe d'alimentation (17) pour générer un flux d'eau de régulation thermique en l'absence de ladite dose de café dans ladite chambre d'infusion (12), jusqu'à ce que ladite valeur de température détectée (T) atteigne ladite valeur initiale de température d'extraction (Ti) du cycle d'extraction sélectionné.

2. Procédé d'extraction de café selon la revendication 1, **caractérisé en ce qu'**un chauffe-eau instantané est utilisé comme chauffage électrique (18).

3. Procédé d'extraction de café selon l'une quelconque des revendications précédentes, **caractérisé en ce que** ladite machine à café (10) fait circuler ledit flux d'eau de régulation thermique en séquence au moins à travers ledit chauffage électrique (18) et ladite unité d'infusion (11).

4. Procédé d'extraction de café selon la revendication précédente, **caractérisé en ce que** ladite machine à café (10) achemine ledit flux d'eau de régulation thermique vers un conduit de décharge (36) positionné en aval de ladite unité d'infusion (11).

5. Procédé d'extraction de café selon l'une quelconque des revendications précédentes, **caractérisé en ce que** ladite machine à café (10) détecte ladite valeur de température (T) à une entrée ou une sortie dudit chauffage électrique (18).

6. Procédé d'extraction de café selon l'une quelconque des revendications précédentes, **caractérisé en ce que** ladite machine à café (10) réalise ladite étape de régulation thermique en activant ledit chauffage électrique (18) pour chauffer ledit flux d'eau de régulation thermique uniquement si ladite valeur de température détectée (T) est inférieure à ladite température initiale d'extraction du café (Ti) du cycle d'extraction de café sélectionné.

7. Procédé d'extraction de café selon l'une quelconque des revendications précédentes, **caractérisé en ce qu'**au moins un cycle d'extraction de café prévoit l'activation dudit chauffage électrique (18) pendant toute ladite étape d'extraction afin de maintenir ladite valeur initiale d'extraction (Ti) durant ladite étape d'extraction.

8. Procédé d'extraction de café selon l'une quelconque des revendications précédentes, **caractérisé en ce qu'**au moins un cycle d'extraction de café prévoit la désactivation dudit chauffage électrique (18) pendant toute ladite étape d'extraction.

9. Procédé d'extraction de café selon l'une quelconque des revendications 1 à 8, **caractérisé en ce qu'**au moins un cycle d'extraction prévoit une valeur initiale de température d'extraction (Ti) comprise entre 50 °C et 60 °C.

10. Procédé d'extraction de café selon l'une quelconque des revendications 1 à 8, **caractérisé en ce qu'**au moins un cycle d'extraction prévoit une valeur initiale de température d'extraction (Ti) comprise entre 90 °C et 95 °C.

11. Machine à café (10) comprenant un contrôleur électronique (100), un circuit d'infusion et des moyens de détection (21) d'une température le long dudit circuit d'infusion, ledit circuit d'infusion comprenant un réservoir d'eau (14) ou une connexion à une source d'eau, une pompe d'alimentation (17), un chauffage électrique (18) et une unité d'infusion (11) ayant une chambre d'infusion (12) dans laquelle une dose de poudre de café peut être positionnée, connectés en série, ledit contrôleur électronique (100) stockant une pluralité de cycles d'extraction de café sélectionnables comprenant chacun, en séquence, une étape de régulation thermique du circuit d'infusion, une étape d'introduction de ladite dose dans ladite chambre d'infusion (12), et une étape d'extraction du café avec une valeur initiale de température d'extraction du café (Ti), **caractérisée en ce qu'**au moins un cycle d'extraction prévoit une étape d'extraction avec une valeur initiale de température d'extraction (Ti) égale à la température ambiante et avec ledit chauffage électrique (18) désactivé, et **en ce que** ledit contrôleur électronique (100) est configuré pour :
- acquérir une sélection d'un cycle d'extraction de café ;
- acquérir la valeur (T) de la température détectée par lesdits moyens de détection (21)
- comparer ladite valeur de température détectée (T) à la valeur initiale de température d'extraction (Ti) du cycle d'extraction sélectionné ;
- etexécuter ladite étape de régulation thermique en activant la pompe d'alimentation (17) pour générer un flux d'eau de régulation thermique en l'absence de ladite dose de café dans ladite chambre d'infusion (12), jusqu'à ce que ladite valeur de température détectée (T) atteigne ladite valeur initiale de température d'extraction (Ti) du cycle d'extraction sélectionné.

12. Machine à café (10) selon la revendication précédente, **caractérisée en ce que** ledit chauffage électrique (18) consiste en un chauffe-eau instantané.

13. Machine à café (10) selon l'une quelconque des revendications 11 et 12, **caractérisée en ce que** ledit circuit d'infusion comprend en outre un conduit de distribution d'infusion de café (32), un premier conduit de raccordement (120) entre la sortie de la pompe d'alimentation (17) et une entrée du chauffage électrique (18), un deuxième conduit de raccordement (13) entre une sortie du chauffage électrique (18) et une entrée de l'unité d'infusion (11), une unité de valve (35), **un** troisième conduit de raccordement (15) entre une sortie de l'unité d'infusion (11) et une entrée de l'unité de valve (35), ladite unité de valve étant configurée pour fournir **un** premier chemin de sortie (27) à haute pression comprenant un moyen de contre-pression (33) et un deuxième chemin de sortie (28) à basse pression comprenant un moyen de dérivation (34) activable sélectivement par le contrôleur électronique (100) pour contourner l'action dudit moyen de contre-pression et faire passer la boisson dans ledit deuxième chemin de sortie (28).

14. Machine à café (10) selon la revendication précédente, **caractérisée en ce que** ledit premier conduit de raccordement (120), ledit chauffage électrique (18), ledit deuxième conduit de raccordement (13), ladite unité d'infusion (11), ledit troisième conduit de raccordement (15) et ladite unité de valve (35) sont connectés pour être traversés en séquence par ledit flux d'eau de régulation thermique.
